# FASCICULE DE BREVET EUROPEEN

(11) **EP 1 113 866 B1**
(45) Date de publication et mention de la délivrance du brevet: **20.08.2003**
(21) Numéro de dépôt: 99940252.2
(22) Date de dépôt: 30.08.1999
(51) Int. Cl.: B01J 8/04, B01D 15/02

(54) **SYSTEME DISTRIBUTEUR-COLLECTEUR DE FLUIDES ET SON PROCEDE**
SYSTEM ZUM SAMMELN UND VERTEILEN VON FLUIDEN, SOWIE IHRE VERFAHREN
FLUID DISTRIBUTING-COLLECTING SYSTEM AND CORRESPONDING METHOD

(30) Priorité: 02.09.1998 FR 9810998
(43) Date de publication de la demande: 11.07.2001
(73) Titulaire: Institut Francais du Petrole, 92852 Rueil-Malmaison Cedex (FR)
(72) Inventeur: DESSAPT, Jean-Paul, F-78650 Beynes (FR); DUCHENE, Pascal, F-38200 Vienne (FR); SZYMKOWIAK, Bertrand, F-92250 La Garenne Colombes (FR); FERSCHNEIDER, Gilles, F-69360 Saint Symphorien d'Ozon (FR); CALLEBERT, Olivier, F-92500 Rueil-Malmaison (FR)
(86) Numéro de dépôt international: FR9902064
(87) Numéro de publication internationale: WO00013781

(56) Documents cités:
- EP-A- 0 769 316
- WO-A-95/03867
- US-A- 3 268 605
- US-A- 4 999 102

## Description

La présente invention concerne un distributeur-collecteur ou système de distribution-collecte de fluides, utilisé par exemple dans un appareil de mise en contact de fluides-solide.

L'invention trouve notamment son application dans le domaine de la chromatographie pour des fluides se trouvant dans un état gazeux, liquide ou supercritique.

L'invention concerne un système de distribution-collecte pouvant être utilisé dans un procédé de séparation en lit mobile simulé de paraxylène contenu dans un mélange de xylènes et d'éthylbenzène, en vue de la synthèse d'acide téréphtalique, un intermédiaire pétrochimique dans la fabrication des textiles.

L'invention peut aussi être utilisée dans les procédés de séparation, par exemple, un mélange d'isomères de xylène et d'éthylbenzène, un mélange d'un composé sélectionné à partir d'acides gras saturés et leurs esters, un mélange de paraffine et d'oléfines, un mélange d'isoparaffines et de normal paraffines, et d'autres composés.

Le dispositif selon l'invention peut opérer en phase liquide, en phase vapeur ou en phase supercritique et dans tous les domaines de séparation en chimie, pétrochimie ou pétrolier, par exemple.

Dans le domaine des procédés de séparation, il est habituel de faire appel à des systèmes de lit mobile simulé pour séparer les corps comportant par exemple au moins deux composés chimiques différents ou encore deux isomères d'un même composé. Le matériau d'adsorption utilisé est par exemple un solide.

L'arrière plan technologique illustrant la mise en oeuvre d'un dispositif d'adsorption à contre-courant simulé est décrit par exemple dans le brevet US-2.985.589.

Dans ces procédés, un fluide principal introduit par une pompe s'écoule à travers le lit de solide le long de l'axe central de la colonne. Pour obtenir les meilleures performances de ce procédé, il est important que le fluide principal s'écoule à travers l'adsorbant selon un écoulement de type piston (plug flow), afin d'avoir une composition et un front d'écoulement le plus uniforme possible en tous points de la surface du lit d'adsorbant.

Pour cela, l'art antérieur décrit différents moyens tentant d'obtenir et de conserver un tel écoulement.

Le dispositif décrit dans le brevet US-3.523.762, disposé entre deux lits d'adsorbants, permet de remélanger le fluide en écoulement.

Pour des applications à contre-courant simulé, le dispositif décrit dans le brevet US-3.214.247, montre une structure comportant une grille supérieure, une grille inférieure de maintien des particules et deux baffles horizontaux non perforés positionnés entre ces deux grilles. Les fluides sont ajoutés ou extraits au niveau d'un espace central entre les déflecteurs par l'intermédiaire d'un conduit traversant la section totale du dispositif. Un tel dispositif permet de remélanger le fluide en écoulement dans la colonne et aussi d'assurer un bon mélange d'un fluide additionné au fluide principal.

On peut aussi mentionner les deux brevets US-5.792.346 et US-5.755.960 qui décrivent des panneaux de distribution de fluides ou DME, ayant notamment pour fonction de mélanger, extraire ou additionner des fluides. Ces DME sont reliés à des circuits de distribution-collecte des fluides cherchant à homogénéiser le temps de parcours des particules du fluide de l'extérieur de la colonne jusqu'aux panneaux et inversement d'un panneau vers un réseau de collecte extérieur.

En effet, la dispersion dans la composition de l'écoulement et dans le temps de parcours des particules de fluides peut aussi provenir de la façon dont les fluides sont distribués ou extraits jusqu'aux DME ou à partir des DME.

Certains circuits de distribution ou de collecte sont conçus pour diminuer le temps de dispersion des fluides. La géométrie de ces circuits est en règle générale adaptée à la géométrie des plateaux et à la disposition des DME au niveau de ces plateaux.

Par exemple, dans le brevet US-5.792.346, le circuit de distribution ou d'extraction des fluides secondaires présente une symétrie de distribution et une isolongueur des lignes de transfert des fluides. Ces circuits permettent une distribution des fluides de type râteau ou une distribution radiale à partir ou vers le centre de la colonne de séparation.

Dans le brevet US-5.755.960, le circuit de distribution-collecte est composé de plusieurs conduites radiales comportant plusieurs ramifications pour distribuer ou collecter des fluides secondaires vers ou à partir de chaque panneau formant un plateau de distribution. Les ramifications sont réparties sur la totalité ou sur une partie de la longueur du conduit d'alimentation radial auxquelles elles sont raccordées. Une autre variante consiste à distribuer les fluides à partir d'une couronne ou de demi-couronnes positionnées à la périphérie de la colonne. Les conduits de transfert des fluides jusqu'à un DME sont répartis sur toute la longueur de la couronne ou des demi-couronnes.

Le brevet EP-074.815 décrit un système de distribution de fluides à l'intérieur d'un dispositif de mise en contact de fluide-solide qui comporte plusieurs couronnes de distribution de fluide. Les couronnes sont montées sur un tube central de l'appareil et disposées entre des niveaux adjacents de plateaux distributeurs de fluides. Plusieurs tuyaux de distribution s'étendant entre un plateau distributeur de fluide et la couronne de distribution permettent l'injection et/ou la collecte de fluide.

Tous ces systèmes répondent au besoin d'obtenir un écoulement de type piston ou " Plug Flow " à l'intérieur d'un dispositif de mise en contact, de minimiser les temps de parcours des fluides de façon qu'ils arrivent pratiquement en même temps dans les différents panneaux d'un même plateau.

L'objet de la présente invention concerne un système de distribution-collecte de fluides permettant notamment d'obtenir et de conserver un écoulement de type piston, une homogénéité de la composition de cet écoulement, de minimiser le temps de dispersion des fluides injectés ou extraits dans les panneaux formant un plateau de distribution.

Dans toute la suite de la description, on désigne par chambre de niveau 1 une chambre qui a pour fonction de diviser au moins par deux un fluide ou de collecter deux flux de fluides et chambre de niveau 2 une chambre qui assure la division par deux d'un fluide issu d'une chambre de niveau 1 ou la collecte d'au moins deux flux de fluides pour les envoyer vers une chambre de niveau 1.

Sous le terme DME, on désigne un panneau ayant notamment pour fonction de collecter, mélanger, extraire ou remélanger un ou plusieurs fluides.

La présente invention concerne un système de distribution-collecte de fluides pour un appareil de mise en contact de fluide-solide, ledit appareil comportant une enceinte, au moins un conduit d'introduction d'un fluide principal et au moins un conduit d'évacuation du fluide principal, plusieurs plateaux distributeurs (Pn), chacun desdits plateaux comportant plusieurs panneaux de mélange, distribution ou extraction de fluides ou DME.

Il est caractérisé en ce qu'il comporte
* au moins un conduit permettant de mettre en communication ledit appareil et l'extérieur,
* au moins une chambre (N₁), en liaison avec le ou lesdits conduits,
* un ou plusieurs conduits de raccordements C(N₂₀)j, C(N₂₁)j, qui mettent en communication la chambre et au moins un des DME d'un plateau (Pn), les points de raccordement rj desdits conduits étant situés dans une zone (Z₂₀, Z₂₁), le positionnement de ladite zone étant déterminé par un angle α compté à partir d'un des axes radiaux dudit plateau(Pn), chacun des conduits de raccordements ayant une longueur li, la valeur de chacune des longueurs li, de l'angle α et de la longueur Zr de la zone, étant choisis pour que le temps de parcours des fluides entre un panneau (DME) et le ou les conduits (1, 2) soit sensiblement identique pour tous les fluides.

La chambre assure par exemple la division du fluide en au moins deux flux.

Selon un mode de réalisation, le système de distribution-collecte comporte par exemple :
* au moins une chambre de niveau 1 (N₁), assurant une division ou une collecte par deux du débit de fluide, la chambre (N₁) étant en liaison avec le ou les conduits,
* au moins une chambre dite de niveau 2 (N₂₀, N₂₁), les chambres assurant une division ou une collecte par deux du débit de fluide provenant de ou envoyé vers la ou les chambres (N₁),
* un ou plusieurs conduits de raccordements C(N₂₀)j, C(N₂₁)j, qui s'étendent entre au moins une chambre de niveau 2 (N₂₀, N₂₁), et au moins un des DME d'un plateau (Pn), les points de raccordement rj des conduits étant situés dans une zone (Z₂₀, Z₂₁), le positionnement de la zone étant déterminé par un angle α compté à partir d'un des axes radiaux du plateau (Pn), chacun des conduits de raccordements ayant une longueur li, la valeur de chacune des longueurs li, de l'angle α et de la longueur Zr de la zone, étant choisis pour que le temps de parcours des'fluides entre un panneau (DME) et le ou les conduits soit sensiblement identique pour tous les fluides.

L'angle α est par exemple compris entre 30 et 90 degrés, de préférence entre 50 et 60 degrés et la longueur Zr pour une zone correspondant au secteur d'angle α +/-ε comprise entre 3 et 30 degrés et de préférence entre 7 et 15 degrés.

La présente invention concerne aussi un dispositif de mise en contact de fluide-solide qui comprend une enceinte comportant une paroi extérieure, au moins un conduit d'introduction et au moins un conduit d'extraction d'un fluide principal, plusieurs conduits d'introduction ou d'extraction de fluides secondaires, plusieurs niveaux espacés de plateaux (Pn), chaque plateau (Pn) comportant un ou plusieurs panneaux distributeur-mélangeur-extracteur (DME) de fluides secondaires et de fluide principal, au moins un système de distribution-collecte des fluides caractérisé en ce que :
* ledit système de distribution-collecte est disposé à la périphérie de l'enceinte,
* ledit système de distribution-collecte est en liaison avec au moins un plateau (Pn) de distribution,
   ledit système comporte:

* au moins un conduit permettant de mettre en communication le dispositif et l'extérieur,
* une ou plusieurs chambres de niveau 1 (N₁) assurant une division ou une collecte par deux du débit de fluide,
* une ou plusieurs chambres (N₂₀, N₂₁) de niveau 2, les chambres de niveau 2 assurant une division ou une collecte par deux du débit de fluide provenant ou envoyé vers la chambre (N₁) de niveau 1,
* des conduits de raccordements (C(N₂₀)j, C(N₂₁)j) qui s'étendent entre une chambre de niveau 2 (N₂₀, N₂₁) et au moins un des panneaux (DME) d'un plateau (Pn), les points de raccordement des conduits de raccordements étant situés dans une zone (Z₂₀, Z₂₁), le positionnement de cette zone étant déterminé par un angle α compté à partir d'un des axes radiaux d'un plateau (Pn), chacun des conduits de raccordements de fluides ayant une longueur li, la valeur de chacune des longueurs li, de l'angle α et la longueur Zr de la zone sont choisis pour que le temps de parcours des fluides entre un panneau (DME) d'un plateau (Pn) et le conduit d'introduction ou d'extraction des fluides soit sensiblement identique pour tous les fluides.

L'angle α peut être compris entre 30 et 90 degrés, de préférence entre 50 et 60 degrés et la longueur Zr correspondant au secteur d'angle comprise entre 3 et 30 degrés et de préférence entre 7 et 15 degrés.

Selon une variante de réalisation, le dispositif comporte au moins un plateau comportant au moins un DME présentant les caractéristiques suivantes :
* au moins un moyen de collecte d'un fluide principal,
* au moins deux rails d'injection et/ou de soutirage permettant le passage des fluides secondaires pourvus chacun d'ouvertures, les rails étant disposés l'un au-dessus de l'autre,
* au moins deux chambres de mélange pourvues d'ouvertures, les chambres étant disposées de part et d'autre d'au moins un des rails, et par rapport aux ouvertures,
* des moyens de distribution du fluide issu de la chambre de mélange,
* des moyens de séparation desdits moyens de collecte et de distribution.

Chaque plateau (Pn) peut être divisé en plusieurs panneaux ou DME selon une découpe en parallèles.

Un plateau peut être divisé en quatre secteurs.

Le rail supérieur a par exemple une fonction de collecte des fluides et le rail inférieur une fonction d'injection des fluides.

Le rail supérieur peut avoir une fonction d'injection des fluides et le rail inférieur une fonction de collecte des fluides.

Selon une autre variante de réalisation les rails supérieur et inférieur ont une fonction d'injection-collecte des fluides.

Les ouvertures du ou des rails d'injection sont disposées de façon telles que le jet de fluide passant à travers percute une partie d'une paroi pleine d'un des éléments mécaniques du DME.

Les ouvertures peuvent être disposées en alternance ou en quiconque.

Les ouvertures des rails d'injection et/ou de soutirage sont définies par exemple avec les paramètres suivants :
* un diamètre compris entre 2 et 15 mm et de préférence dans la gamme 4 à 7 mm
* un pas de perforation compris entre 25 et 400 mm et de préférence entre 50 et 200 mm,
* une vitesse de passage des fluides compris entre 3 - 20 m/s et de préférence entre 5 - 15 m/s, la valeur du pas corisidéré avec la valeur de la vitesse permet d'obtenir un bon mélange du fluide secondaire et du fluide principal.

Les ouvertures des chambres de mélange présentent par exemple les caractéristiques suivantes :
* un diamètre compris entre 10 et 25 mm, et de préférence entre 5 et 50 mm,
* un pas de perforation choisi parmi l'intervalle 50 - 200 mm et de préférence dans l'intervalle 25 - 400 mm,
* une vitesse de passage du mélange compris entre 1.0 et 2.0 m/s et de préférence entre 0.5 - 3.5 m/s.

La présente invention concerne aussi un procédé pour séparer au moins un composé à partir d'un mélange ou d'un corps par adsorption.

Il est caractérisé en ce que l'on met en contact un fluide principal à partir duquel on cherche à séparer certains composés avec un adsorbant choisi en fonction de son pouvoir à séparer les composés, on injecte et/ou on extrait les fluides secondaires par l'intermédiaire d'un ou plusieurs systèmes de distribution-collecte présentant l'une des caractéristiques des revendications 1 ou 4 ou d'un dispositif présentant les caractéristiques des revendications 5 à 15.

On peut regrouper les fluides par fonction (injection/ou soutirage) ou par nature ou par valeur de débit.

Les système, dispositif et procédé selon l'invention s'appliquent à la séparation d'une charge en chromatographie pour des fluides dans un état gazeux, liquide ou supercritique.

Ils peuvent aussi s'appliquer à la séparation de paraxylène en lit mobile simulé.

Le dispositif selon l'invention présente notamment les avantages suivants:
* du fait de la bonne symétrie de distribution des fluides secondaires et du fluide principal, le mélange réalisé est amélioré sur l'ensemble du plateau, ce qui confère à l'écoulement circulant dans le dispositif de séparation une composition plus homogène, et un écoulement de type piston,
* optimiser le mélange des fluides à l'intérieur des panneaux de distribution, mélange, extraction, remélanger le fluide principal en écoulement,
* diminuer la dispersion temporelle de l'injection des fluides ou de l'extraction des fluides vers ou à partir des différents panneaux constituant un plateau de distribution.

D'autres caractéristiques et avantages du dispositif selon l'invention apparaîtront à la lecture de la description d'exemples donnés ci-après à titre illustratif et nullement limitatif en se référant aux dessins annexés où
- la figure 1 représente une vue en perspective d'un exemple de système de distribution-collecte de fluides selon l'invention associé à un plateau de distribution,
- les figures 2A, 2B schématisent une coupe d'un plateau et du système de distribution-collecte associé,
- la figure 3 montre une vue en coupe d'une colonne de séparation pourvue d'un système de distribution-collecte de la figure 1,
- la figure 4 schématise une coupe d'un exemple particulier d'un panneau de distribution,
- les figures 5A et 5B montrent une vue de dessus et une coupe d'un exemple de disposition de conduits pour alimenter un panneau,

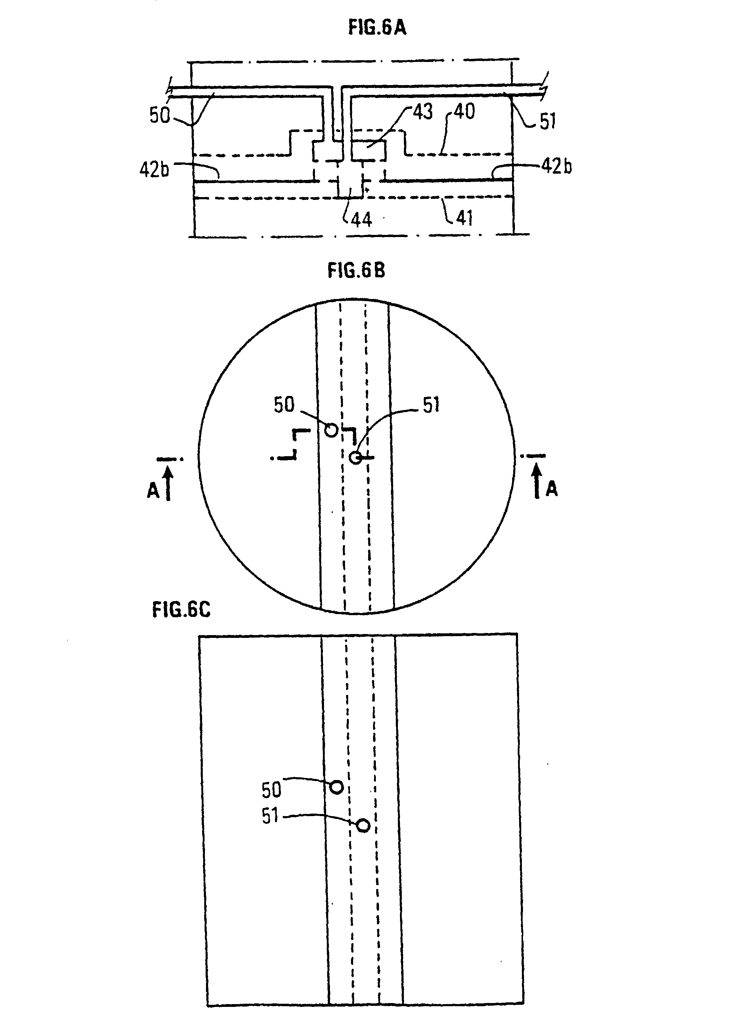

- les figures 6A, 6B et 6C représentent différentes variantes de réalisation d'un système de distribution-collecte des fluides.

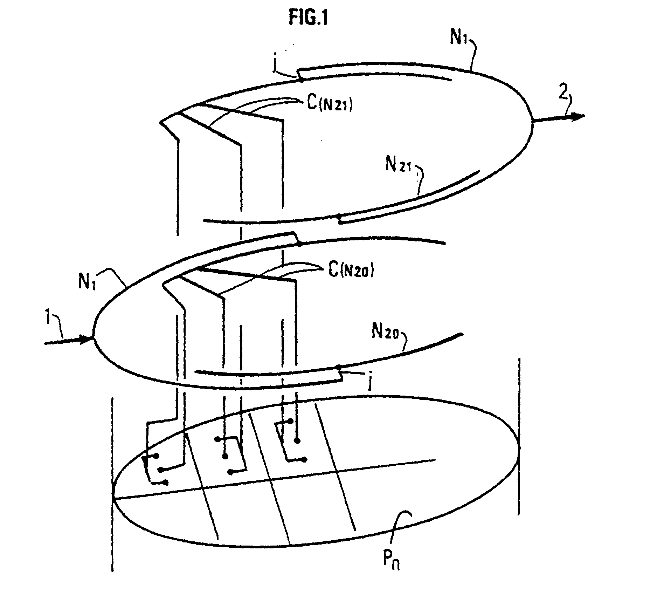

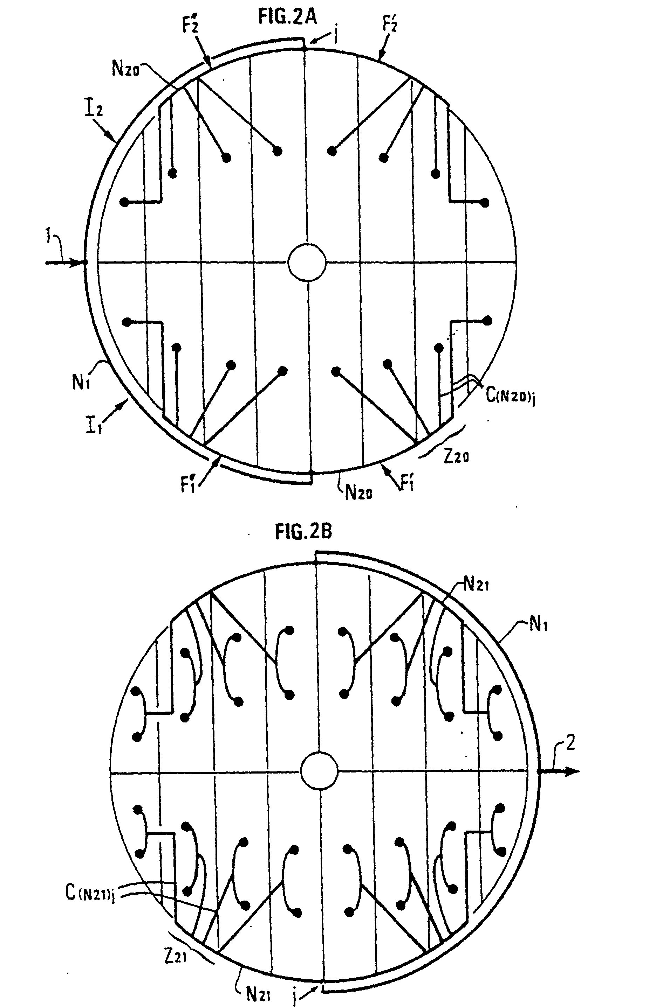

Les figures 1 et 2A, 2B représentent un exemple de système de distribution-collecte de fluides associé à un plateau de distribution de fluides comportant plusieurs panneaux ou DME ayant pour fonction de mélanger, distribuer ou extraire des fluides.

La géométrie et les caractéristiques hydrauliques de ce réseau sont choisies de manière à obtenir une distribution des fluides secondaires la plus symétrique possible pour l'ensemble des panneaux ou des rails d'injection-collecte d'un plateau.

Sur la figure 1, on a représenté deux systèmes de distribution-collecte pouvant être superposés et qui sont associés à un plateau Pn. Le nombre des systèmes de distribution-collecte associé à un plateau Pn est fonction notamment des dimensions géométriques des DME avec lesquels ils sont en liaison.

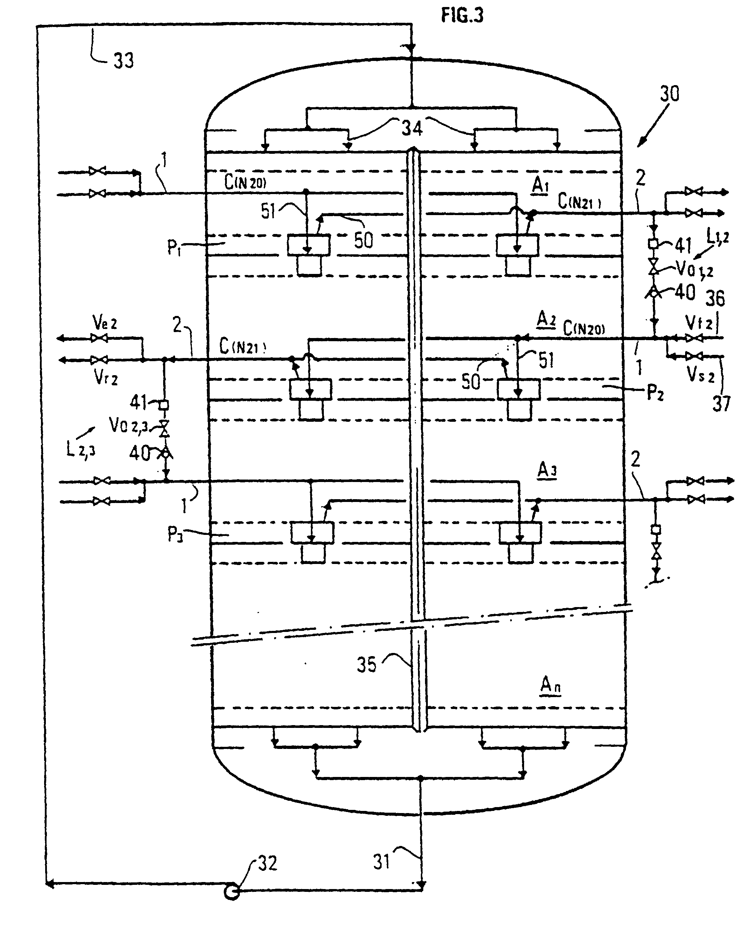

Le plateau est référencé Pn, n étant l'indice du plateau lorsqu'il est disposé par exemple dans une colonne de séparation sensiblement cylindrique telle que celle décrite à la figure 3. Il a la forme d'un disque, par exemple et est découpé en plusieurs DME selon une découpe en parallèles (de type méridien), les largeurs des différents panneaux pouvant être égales.

Le système de distribution-collecte comporte par exemple :
- une chambre annulaire N₁ dite de niveau 1. La chambre N₁ communique avec l'extérieur de la colonne à l'aide d'un conduit 1, 2 par exemple. Ces conduits permettent l'introduction et/ou l'extraction de fluides. Ils peuvent avoir des fonctions précises, par exemple dans le cas où les différents fluides sont regroupés selon différentes variantes dont certaines sont décrites ci-après.
   La chambre annulaire N₁ de section rectangulaire par exemple s'étend en périphérie interne du lit d'adsorbant et assure notamment une division ou une collecte par deux du débit des fluides circulant.
- une chambre annulaire N₂ dite de niveau 2, de section rectangulaire en périphérie de l'adsorbant. Elle assure notamment suivant sa fonction (injection, extraction ou injection/soutirage) respectivement une division ou une collecte ou encore une division et/ou une collecte par deux du débit de fluide. Sa position suivant la fonction du système de distribution-collecte, en raison de l'encombrement géométrique, par exemple peut être disposée au-dessus (référencée N₂₁) ou en dessous (référencée N₂₀) de la chambre N₁.

La jonction J d'une chambre de niveau 2, N₂₀, N₂₁ avec la chambre N₁ de niveau 1 est réalisée par exemple à la moitié de la périphérie de sa longueur.

Une chambre annulaire de niveau 2 comporte, par exemple à chacune de ses extrémités, un ou plusieurs conduits C(N₂₀)j ou C(N₂₁)j de raccordement avec les panneaux d'un plateau, l'indice j correspond à l'indice d'un panneau en liaison avec les conduits. Un conduit C(N₂₀)j ou C(N₂₁)j est raccordé à une zone (Z₂₀, Z₂₁) de la chambre annulaire concernée (N₂₁ ou N₂₁).

La longueur d'une chambre annulaire dite de niveau 1 ou N₁ est, par exemple égale à la moitié du périmètre du plateau correspondant.

La longueur d'une chambre annulaire dite de niveau 2 ou N₂ est comprise dans un secteur angulaire de 20 à 160 degrés et de préférence entre 100 et 120 degrés.

La zone Z₂₀, Z₂₁ peut être repérée à l'aide d'un angle α compté à partir d'un rayon du plateau, par exemple le rayon passant par le point de jonction J, et par rapport au point central de la zone. Sa longueur Zr est déterminée par exemple par le secteur angulaire défini par α +/- ε , borné par les angles αₘᵢₙ et αₘₐₓ.

La valeur de l'angle α sera par exemple prise dans la fourchette (10 degrés, 80 degrés) et de préférence dans la plage (40 degrés, 70 degrés).

La valeur du secteur angulaire sera choisie dans l'intervalle (3 degrés, 30 degrés) et de préférence dans l'intervalle (7 degrés, 15 degrés) ce qui correspond à la longueur Zr pour les zones Z₂₀ et Z₂₁.

On cherche à avoir une disposition des conduits la plus en étoile possible de manière à obtenir un temps de dispersion le plus faible possible dans la distribution ou l'extraction des fluides. Les points de raccordement des conduites sont regroupés par exemple pratiquement en un même point de la zone, dans un secteur angulaire le plus petit possible.

Le positionnement des conduits de raccordement, le choix du secteur angulaire permettent notamment de réduire le temps de retard pur et de dispersion. Ce temps de retard peut ainsi être réduit à 10s.

Chaque conduit C(N₂₀)j, C(N₂₁)j de distribution et/ou d'extraction a un diamètre dj, une longueur lj et un point rj de raccordement avec une chambre de niveau 2, par exemple, disposé dans la zone Z₂₀, Z₂₁.

Les différents paramètres α, ε , li, sont choisis pour que les fluides arrivent sensiblement en même temps dans tous les panneaux formant un plateau ou en cours d'extraction de fluides parviennent à peu près en même temps jusqu'aux conduits 1, 2.

Le diamètre dj d'un conduit est déterminé en fonction du débit du fluide circulant pour assurer une vitesse de circulation du fluide sensiblement identique dans les différents conduits.

Un conduit de raccordement peut être en liaison avec un ou plusieurs panneaux DME. Dans ce cas il est prolongé par des ramifications jusqu'à un rail de distribution ou de collecte du panneau.

Les figures 2A et 2B représentent un plateau comportant plusieurs DME, le plateau étant divisé en quatre secteurs selon une découpe en parallèles (de type méridien). Le nombre de panneaux dans ce cas sera de préférence un nombre pair.

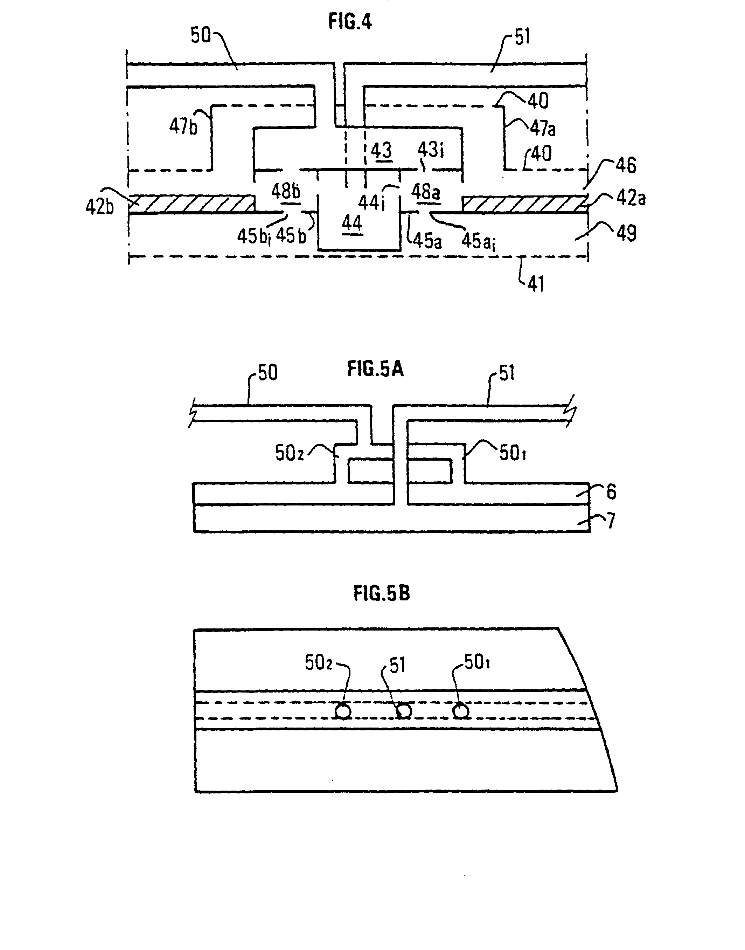

La figure 2A montre un exemple d'utilisation du système de distribution-collecte qui assure l'injection d'un fluide dans le rail inférieur 44 (Fig. 4), alors que la figure 2B montre le système de distribution-collecte qui assure le soutirage à partir du rail supérieur 43 (Fig. 4) dans le cas d'un DME présentant l'une des caractéristiques données à la figure 4 et lorsque les fluides sont regroupés par fonction. Cet exemple est détaillé au paragraphe « cas des fluides regroupés par fonction » décrit ci-après.

Selon ce mode particulier de réalisation, les conduits de raccordements C(N₂₁)j ou C(N₂₀)j permettent de mettre en communication une chambre annulaire N₂₁, N₂₀ avec un panneau ou DME.

L'exemple donné ci-dessus mentionne une forme annulaire pour les chambres du système de distribution-collecte. Sans sortir du cadre de l'invention, il est possible de concevoir des chambres N₁, N₂₀, N₂₁ ayant d'autres formes adaptées à la forme de la colonne de séparation sur laquelle le système est disposé.

De manière à mieux faire comprendre le système de distribution-collecte selon l'invention, et les avantages qu'il apporte, la figure 3 schématise une colonne de séparation équipée d'un tel système de distribution-collecte à titre illustratif et nullement limitatif.

La colonne est par exemple une colonne de séparation par chromatographie en lit mobile simulé. Les fluides dénommés " fluides secondaires " peuvent être la charge, l'extrait ou le raffinat obtenus par séparation ou encore le désorbant utilisé pour extraire des lits d'adsorbants les constituants qui ont été adsorbés lors du procédé de séparation.

La colonne comporte une enceinte 30 par exemple sensiblement cylindrique incluant tous les éléments permettant de réaliser une séparation par adsorption. Il est aussi possible de disposer plusieurs colonnes connectées les unes aux autres.

Elle est remplie d'un matériau adsorbant ayant une sélectivité choisie par rapport à la charge traitée. Le matériau adsorbant est réparti à l'intérieur de la colonne en plusieurs lits d'adsorbants A₁ à Aₙ d'adsorbant. Deux lits successifs sont par exemple séparés par un plateau distributeur Pn de fluide. Chaque plateau distributeur comporte plusieurs panneaux ou DME et est relié à un système de distribution de fluides tel que décrit aux figures 1 et 2.

Du fluide principal est soutiré de l'extrémité inférieure de la colonne par une ligne 31 pour être recyclé par une pompe 32 et une ligne 33 à l'extrémité supérieure de cette colonne où il est introduit dans le lit supérieur A₁ d'adsorbant par des lignes 34.

Sur cet exemple de réalisation, la colonne comporte aussi une ligne de by-pass Li, j entre les plateaux, dont le principe de fonctionnement est donné dans la demande de brevet FR 2 772 634 . Un tel procédé permet notamment d'augmenter la pureté des produits obtenus par un tel procédé.

Pour la séparation de paraxylène à partir d'une charge de xylènes, on dispose par exemple de deux colonnes de douze lits chacune, les vingt-quatre lits étant divisés en au moins quatre zones, chaque zone étant délimitée par une injection d'un fluide de l'extérieur de la colonne (du désorbant ou de la charge par exemple) et un soutirage d'un autre fluide (extrait ou raffinat par exemple). Par exemple, cinq lits sont réservés à la zone I, neuf lits à la zone II, sept lits à la zone III et enfin trois lits à la zone IV.

Les panneaux d'un plateau Pn sont par exemple en communication avec l'extérieur de la colonne par l'intermédiaire de lignes de transfert de fluides secondaires (ligne d'injection 36 de charge, ligne d'injection 37 de désorbant, ligne de soutirage d'un extrait et ligne de soutirage d'un raffinat, et éventuellement une ligne d'injection d'un cinquième fluide de back flush). Les lignes de back flush ne sont pas représentées sur la figure pour des raisons de simplification.

Chacune de ces lignes est équipée d'une vanne séquentielle représentée symboliquement par Vfi, Vei, Vsi et Vri, où l'indice i correspond au plateau Pi et où f désigne la charge, e l'extrait, s le désorbant et r le raffinat. L'ensemble de ces vannes est relié à des moyens de permutation séquentielle adaptés pour faire avancer périodiquement chaque point d'injection de fluide secondaire ou de soutirage de fluide secondaire d'un lit dans le sens de circulation du fluide principal, c'est-à-dire du haut vers le bas de façon à obtenir un fonctionnement en lit mobile simulé.

Le circuit permettant de réaliser le by-pass et d'obtenir une composition d'un fluide sensiblement identique en tous points d'un plateau comporte une ligne de dérivation Li,j reliant deux conduits d'introduction ou de soutirage, et deux plateaux. Une ligne de dérivation comporte selon l'art antérieur, au moins un des dispositifs mentionnés ci-après pris seul ou en combinaison , à savoir un clapet anti-retour 40, un débitmètre 41, une vanne V0i,j de contrôle asservie ou non au débitmètre. Une pompe éventuellement disposée sur la ligne de dérivation peut éventuellement suppléer une insuffisance de perte de charge.

La vanne équipant le by-pass ou ligne de dérivation est référencée V0i,j où l'indice 0 correspond à la fonction de by-pass et les indices i, j les plateaux entre lesquels est effectué le by-pass.

De manière plus générale, un lit mobile simulé comporte au moins quatre zones chromatographiques, avantageusement quatre ou cinq, chacune de ces zones étant constituée par au moins une colonne ou un tronçon de colonne. L'ensemble de ces colonnes ou des tronçons de colonne forme une boucle fermée, la pompe de recyclage entre deux tronçons étant régulée en débit.

Ces différentes lignes peuvent être en liaison avec le système de distribution-collecte donnés précédemment.

Sans sortir du cadre de l'invention tout réseau de distribution ou d'extraction de fluides secondaires habituellement utilisés pour les colonnes de séparation par adsorption peuvent être utilisés.

L'enceinte peut comporter une poutre centrale 35 alignée sensiblement selon l'axe verticale de l'enceinte, plus particulièrement pour des colonnes de grand diamètre.

Dans certains cas d'application, par exemple pour des fluides en phase vapeur, l'enceinte peut être disposée sensiblement à l'horizontale.

Un plateau de distribution Pn peut être découpé en plusieurs panneaux ou DME selon une découpe en parallèles (de type méridien). Chacun des panneaux comporte des caractéristiques telles que celles décrites ci-après.

Le plateau Pn schématisé aux figures 2A et 2B est divisé en quatre secteurs, par exemple selon une découpe en parallèles (de type méridien) et comporte plusieurs panneaux DME, de préférence un nombre pair par secteur.

La découpe en panneaux parallèles de largeur sensiblement égale assure une densité surfacique de drainage sensiblement constante pour les panneaux.

La figure 4 détaille un exemple de réalisation de panneau ou DME formant le plateau.

Un panneau élémentaire ou DME est divisé par exemple en deux surfaces sensiblement égales par un circuit de distribution-collecte formé de la superposition de deux boîtes de section rectangulaire ou rails.

Un panneau comporte une grille supérieure 40 et une grille inférieure 41, en considérant le sens de circulation du fluide principal à l'intérieur de la colonne de séparation. La grille 40 supérieure permet de collecter le fluide principal alors que la grille 41 inférieure permet de redistribuer le mélange issu de la chambre de mélange sur l'ensemble du panneau.

Entre ces deux grilles, par exemple de type à fentes, sont disposés différents éléments :
* deux déflecteurs 42a, 42b, ou baffles qui ont notamment pour fonction de séparer le canal de collecte et le canal de distribution décrits ci-après,
* les deux rails 43, 44 permettant le passage des fluides secondaires; ces rails sont disposés l'un au-dessus de l'autre, par exemple. Le rail supérieur 43 peut être situé au-dessus des déflecteurs, alors que le circuit inférieur 44 peut être positionné entre les deux déflecteurs 42a, 42b et sa hauteur peut être telle qu'il se prolonge au-dessous des déflecteurs.

Ces circuits ou rails 43 et 44, sont pourvus sur au moins une de leur paroi d'un ou de plusieurs orifices référencés respectivement 43i et 44i, pour laisser le passage des fluides secondaires. Sur la figure 4, les orifices 43i sont disposés sur la paroi inférieure du rail 43, et les orifices 44i sur les parois latérales du rail 44, les orifices 44 sont disposés pour que les flux de fluides qui sont injectés percutent l'extrémité des déflecteurs 42a, 42b, par exemple.

Chaque rail est perforé symétriquement respectivement sur sa face inférieure ou sa face latérale pour le rail supérieur et sur ces faces latérales pour le rail inférieur. Des précisions sur la répartition et la dimension des orifices sont explicités ci-après.
* dans le prolongement des déflecteurs 42a et 42b se trouvent disposées des plaques respectivement 45a, 45b perforées (ouvertures ou fentes 45ai, 45bi) ces plaques s'étendent jusqu'aux parois du rail 44 par exemple. Les ouvertures 45ai, 45bi de sortie du mélange vers l'espace de redistribution 49 sont par exemple calibrées pour favoriser le mélange transversal,
* un espace 46 de collecte du fluide principal délimité par la grille supérieure 40 (pour des raisons de construction mécanique, la variante représentée sur la figure montre une grille en trois parties, les parties étant reliées entre elles par des parois 47a, 47b) le sommet du rail 43, une paroi latérale du rail 43, les déflecteurs 42a et 42b, cet espace permet de drainer le fluide principal jusqu'aux chambres de mélanges,
* deux chambres 48a, 48b de mélange disposées de part et d'autre du rail inférieur (44).

Préférentiellement, les chambres sont disposées par exemple par rapport aux orifices 6i, 7i du rail 6 ou 7 ou les deux, qui va ou vont avoir pour fonction d'injecter un ou plusieurs fluides dans les chambres de mélange. On les disposera de façon à assurer une injection de fluide la plus homogène, uniforme ou symétrique possible dans l'ensemble de la chambre de mélange par exemple.

La chambre de mélange 48a est par exemple délimitée par une partie de la paroi du rail 43, une paroi latérale du rail 44, le déflecteur 42a et la plaque perforée 45a. La chambre de mélange 48b est délimitée de la même façon par une paroi latérale du rail 44, une partie de la paroi inférieure du rail 43, le déflecteur 42b et la plaque perforée 45b.

Le fluide principal collecté par la grille 40 passe de l'espace de collecte vers la chambre mélange 48a, 48b respectivement, sous la forme d'une lame mince par la fente formée entre le rail supérieur et un des déflecteurs.
* un espace 49 de distribution du mélange ou de collecte du fluide à soutirer, cet espace étant délimité par la grille inférieure 41, la paroi inférieure du rail inférieur 44, lorsque celle-ci n'est pas disposée au même niveau que la grille 41 et les chambres de mélange 48a, 48b ainsi que les deux déflecteurs 42a, 42b.

Du fait de l'agencement des orifices, des chambres de mélange et des rails de distribution et/ou de collecte, le mélange obtenu dans l'espace de redistribution présente une composition dont l'homogénéité est améliorée par rapport aux dispositifs de l'art antérieur.

Les rails ou circuits destinés au passage des fluides secondaires, ainsi que les deux chambres de mélange ont par exemple des formes rectangulaires allongées.

Selon une variante de réalisation, il est possible de disposer entre l'extrémité inférieure des parois 47a, 47b et le déflecteur correspondant 42a, 42b des moyens permettant de créer une série d'orifices calibrés ou des fentes de manière à injecter le fluide principal sous la forme de plusieurs jets dans les chambres de mélange.

La répartition des différents orifices 43i, 44i au niveau des rails 43, 44 et de la chambre de mélange est choisie pour que dans la fonction injection, les fluides qui sont injectés, percutent au moins une partie d'une paroi pleine d'un des éléments du DME.

Par exemple, lorsque le rail 43 a une fonction de soutirage et le rail 44 une fonction d'injection, les données géométriques et dimensionnelles pour les orifices 43i ou 44i relatifs aux rails de distribution ainsi que leur répartition sur les différentes parois seront par exemple choisies parmi les valeurs suivantes :
* un diamètre compris entre 2 et 15 mm et de préférence dans la gamme 4 à 7 mm,
* un pas de perforation compris entre 25 et 400 mm et de préférence entre 50 et 200 mm,
* une vitesse de passage des fluides compris entre 3 - 20 m/s et de préférence entre 5 - 15 m/s, la vitesse permettant d'alimenter les orifices de la façon la plus homogène que possible, la valeur du pas considéré avec la valeur de la vitesse permet d'obtenir un bon mélange du fluide secondaire et du fluide principal.

Les critères donnés pour le choix des valeurs de la vitesse de passage et du pas de perforation restent valables quelque soit la forme des orifices.

Les orifices 44i présentent comme caractéristique supplémentaire d'avoir un axe qui permet au fluide injecté d'aller percuter une partie d'une paroi pleine d'un des éléments mécaniques du DME.

La configuration et les critères de dimensionnement du réseau de soutirage sont sensiblement identiques à ceux du réseau d'injection. Une différence existe dans le plan de perforation du rail de soutirage. Le diamètre des trous des soutirage sera choisi pour obtenir un pas double de celui du rail d'injection et une disposition en alternance, par exemple en quinconce.

Les ouvertures de sortie 45ai, 45bi d'une chambre de mélange ou orifices de passage du mélange auront les caractéristiques suivantes :
* un diamètre compris entre 5 et 50 mm, et de préférence entre 10 et 25 mm,
* un pas de perforation choisi parmi l'intervall 25 - 400 mm et de préférence dans l'intervalle 50 - 200 mm,
* une vitesse de passage du mélange compris entre 0.5 et 3.5 m/s et de préférence entre 1.0-2.0 m/s.

Du fait de la disposition des rails, les conduits de raccordement C(N₂₀)j sont reliés aux rails d'injection 44 par un seul conduit 50 et les conduits de raccordement C(N₂₁)j sont divisés au niveau du rail d'extraction 43 (figure 5A) en deux conduits 51₁, 51₂ qui se réunissent en un conduit 51 par exemple.

Les conduits 51₁, 51₂ sont situés de part et d'autre du conduit 50. Ces conduits sont disposés pour avoir une fonction d'injection ou d'extraction la plus symétrique possible pour les rails 43, 44.

En fonction des regroupements des fluides, les rails 43 et 44 peuvent assurer des fonctions différentes : une fonction de distribution, une fonction d'extraction ou encore les deux fonctions.

Selon une variante de réalisation, un DME ou panneau peut aussi être divisé en plusieurs systèmes d'injection-collecte donc comporter plusieurs systèmes de rails superposés. Dans ce cas, les conduits 50, 51 sont divisés de façon à être agencés par rapport aux rails supérieurs et inférieurs d'une manière sensiblement identique à celle décrite aux figures 5A et 5B.

### • cas du regroupement des fluides par fonction :

### Injection (figures 1 et 2A)

* quatre conduits C(N₂₀)j avec j variant de 1 à 4 permettent l'injection de fluide vers 4 DME d'un secteur quart de plateau,
* la charge et/ou le désorbant sont introduits par le conduit 1 dans la chambre annulaire N₁. Le flux injecté est divisé en deux flux qui parcourent les chemins I1 et I2 qui correspondent sensiblement à la moitié de la demi-circonférence du plateau. Chaque flux passe ensuite dans la chambre annulaire N₂₀ dans laquelle il est divisé en deux flux F'1 et F"1. Chaque flux est ensuite distribué à partir des conduits de raccordement C(N₂₀)j regroupés dans la zone Z₂₀, et du conduit 50 en liaison avec ces conduits de raccordement au niveau du rail inférieur 44 de chacun des DME.

Les flux issus des orifices 44i vont percuter l'extrémité des déflecteurs 42a, 42b et sont mélangés avec la lame de fluide principal.

### Extraction (figures 1 et 2B)

* quatre conduits C(N21)j vont permettre d'extraire un fluide à partir de 4 panneaux ou DME,
* l'extrait et le raffinat sont soutirés à partir d'un rail d'un panneau, par exemple le rail supérieur 43, et les deux conduits de piquage 51₁, 51₂, vers le conduit 51. Ils passent ensuite à travers les conduits de raccordements C(N₂₁)j en liaison avec la zone Z₂₁ d'une chambre N₂₁. Les deux flux de fluides collectés dans les zones positionnées au niveau des deux extrémités de la chambre annulaire N₂₁ sont regroupés avant de passer dans la chambre annulaire N₁ en liaison avec le conduit 2 qui récupère tous les flux provenant des quatre secteurs du plateau.

### • cas du regroupement des fluides par nature ;

Les fluides considérés comme fluides propres sont le désorbant et l'extrait et les fluides dits " sales ", le raffinat et la charge.
Les rails 43 et 44 assurent dans ce cas les deux fonctions de distribution et d'extraction.

### • cas du regroupement par débit

Les fluides ayant par exemple un faible débit seront la charge et l'extrait et un débit important le désorbant et le raffinat.
Dans ce cas, les rails 43 et 44 assurent les deux fonctions de distribution et d'extraction.

Dans les deux derniers exemples de regroupement, les fluides injectés par les ouvertures 43i et 44i vont percuter une partie des parois pleines respectivement de la paroi 45 et des déflecteurs 42A, 42B. Ils passent par le système de distribution-collecte en liaison avec le panneau ; alors que les fluides à extraire sont collectés dans les rails 43 ou 44 avant d'être envoyés par les conduits de raccordements vers les chambres annulaires précédemment mentionnées.

Les orifices ou passage des fluides peuvent présenter tout type de géométrie, tel que une fente unique, plusieurs fentes ou encore des trous.

Les chemins d'injection, d'extraction sont identiques à ceux qui ont été décrits dans le schéma de regroupement par fonction.

L'espace de collecte du fluide principal a de préférence une forme adaptée pour minimiser les volumes morts et les turbulences des fluides. Il a une hauteur par exemple comprise entre 3 et 25 mm et de préférence comprise entre 7 et 15 mm et une forme sensiblement rectangulaire ou conique. Il peut présenter les caractéristiques mentionnées dans le brevet précité US-5.755.960 du demandeur.

L'espace de distribution du mélange avant la grille sera par exemple déterminé en tenant compte des caractéristiques physiques du fluide principal.

Le volume de la chambre de mélange sera de préférence adapté pour minimiser les volumes morts. Ses dimensions pourront être choisies parmi celles données dans l'un des brevets US-5.792.346 et US-5.755.960.

Tout moyen promoteur de turbulence pourra être ajouté à l'intérieur de la chambre de mélange. Ces moyens peuvent se présenter sous la forme de chicanes, de baffles ou tout autre moyen qui sont destinés à accroître l'efficacité du mélange. Le volume de cette chambre sera choisi suffisamment petit pour minimiser l'influence des phénomènes de rétromélange.

Les paramètres donnés pour un DME et pour le système de distribution-collecte ci-dessus à titre indicatif en relation avec une colonne de séparation de forme sensiblement cylindrique pourrait sans sortir du cadre de l'invention être appliquées à une colonne de séparation ayant une forme quelconque, le système de distribution-collecte ayant alors une forme adaptée à celle de la colonne.

De même, un plateau peut être partagé en plusieurs DEM selon une découpe autre que la découpe en parallèles, par exemple en secteurs, de type camembert.

Sans sortir du cadre de l'invention, les DME et le système de distribution-collecte décrits ci-dessus peuvent aisément être utilisés dans des dispositifs de séparation comportant ou non une poutre centrale de maintien et ayant un diamètre variant par exemple de 3 à 10 m.

Ils peuvent aussi être utilisés pour des colonnes de séparation ayant un diamètre inférieur ou égal à 5m, et ne comportant pas de poutre support centrale.

## Revendications

1. Système de distribution-collecte de fluides pour un appareil de mise en contact fluide-solide, ledit appareil comportant une enceinte (30), au moins un conduit (33) d'introduction d'un fluide principal et au moins un conduit (31) d'évacuation du fluide principal, plusieurs plateaux distributeurs (Pn), chacun desdits plateaux comportant plusieurs panneaux de mélange, distribution ou extraction de fluides ou DME **caractérisé en ce qu'**il comporte :
* au moins un conduit (1, 2) permettant de mettre en communication ledit appareil et l'extérieur,
* au moins une chambre (N₁), en liaison avec le ou lesdits conduits (1, 2),
* un ou plusieurs conduits de raccordements C(N₂₀)j, C(N₂₁)j, qui mettent en communication la chambre et au moins un des DME d'un plateau (Pn), les points de raccordement rj desdits conduits étant situés dans une zone (Z₂₀, Z₂₁), le positionnement de ladite zone étant déterminé par un angle α compté à partir d'un des axes radiaux dudit plateau (Pn), chacun des conduits de raccordements ayant une longueur li, la valeur de chacune des longueurs li, de l'angle α et de la longueur Zr de la zone, étant choisis pour que le temps de parcours des fluides entre un panneau (DME) et le ou les conduits (1, 2) soit sensiblement identique pour tous les fluides.

2. Système selon la revendication 1 **caractérisé en ce que** ladite chambre assure la division du fluide en au moins deux flux.

3. Système de distribution-collecte de fluides selon la revendication 1 **caractérisé en ce qu'**il comporte :
* au moins une chambre de niveau 1 (N₁), assurant une division ou une collecte par deux du débit de fluide, ladite chambre (N₁) étant en liaison avec le ou lesdits conduits (1, 2),
* au moins une chambre dite de niveau 2 (N₂₀, N₂₁), lesdites chambres assurant une division ou une collecte par deux du débit de fluide provenant de ou envoyé vers la ou les chambres (N₁),
* un ou plusieurs conduits de raccordements C(N₂₀)j, C(N₂₁)j, qui s'étendent entre au moins une chambre de niveau 2 (N₂₀, N₂₁), et au moins un des DME d'un plateau (Pn), les points de raccordement rj desdits conduits étant situés dans une zone (Z₂₀, Z₂₁), le positionnement de ladite zone étant déterminé par un angle α compté à partir d'un des axes radiaux dudit plateau (Pn), chacun des conduits de raccordements ayant une longueur li, la valeur de chacune des longueurs li, de l'angle α et de la longueur Zr de la zone, étant choisis pour que le temps de parcours des fluides entre un panneau (DME) et le ou les conduits (1, 2) soit sensiblement identique pour tous les fluides.

4. Système de distribution-collecte selon l'une des revendications 1 à 3 **caractérisé en ce que** l'angle α est compris entre 30 et 90 degrés, de préférence entre 50 et 60 degrés, et la longueur Zr pour une zone correspondant au secteur d'angle α +/- ε est comprise entre 3 et 30 degrés, et de préférence entre 7 et 15 degrés.

5. Dispositif de mise en contact de fluide-solide qui comprend une enceinte (30) comportant une paroi extérieure, au moins un conduit (33) d'introduction et au moins un conduit (31) d'extraction d'un fluide principal, plusieurs conduits d'introduction ou d'extraction de fluides secondaires, plusieurs niveaux espacés de plateaux (Pn), chaque plateau (Pn) comportant un ou plusieurs panneaux distributeur-mélangeur-extracteur (DME) de fluides secondaires et de fluide principal, au moins un système de distribution-collecte desdits fluides **caractérisé en ce que** :
* ledit système de distribution-collecte est disposé à la périphérie de ladite enceinte,
* ledit système de distribution-collecte est en liaison avec au moins un plateau (Pn) de distribution,
ledit système comporte :
* au moins un conduit (1, 2) permettant de mettre en communication le dispositif et l'extérieur,
* une ou plusieurs chambres de niveau 1 (N₁) assurant une division ou une collecte par deux du débit de fluide,
* une ou plusieurs chambres (N₂₀, N₂₁) de niveau 2, lesdites chambres de niveau 2 assurant une division ou une collecte par deux du débit de fluide provenant de ou envoyé vers la chambre (N₁) de niveau 1,
* un ou plusieurs conduits de raccordements (C(N₂₀)j, C(N₂₁)j) qui s'étendent entre une chambre de niveau 2 (N₂₀, N₂₁) et au moins un des panneaux (DME) d'un plateau (Pn), les points de raccordement desdits conduits de raccordements étant situés dans une zone (Z₂₀, Z₂₁), le positionnement de cette zone étant déterminé par un angle α compté à partir d'un des axes radiaux d'un plateau (Pn), chacun des conduits de raccordements de fluides ayant une longueur li, la valeur de chacune des longueurs li, de l'angle α et la longueur Zr de la zone sont choisis pour que le temps de parcours des fluides entre un panneau (DME) d'un plateau (Pn) et le conduit (1, 2) d'introduction ou d'extraction des fluides soit sensiblement identique pour tous les fluides.

6. Dispositif selon la revendication 5 **caractérisé en ce que** l'angle α est compris entre 30 et 90 degrés, de préférence entre 50 et 60 degrés et **en ce que** la longueur Zr correspondant au secteur d'angle est comprise entre 3 et 30 degrés et de préférence entre 7 et 15 degrés

7. Dispositif de mise en contact selon l'une des revendications 5 ou 6 **caractérisé en ce qu'**il comporte au moins un plateau comportant au moins un DME présentant les caractéristiques suivantes :
* au moins un moyen de collecte d'un fluide principal (40),
* au moins deux rails (43, 44) permettant le passage des fluides secondaires pourvus chacun d'ouvertures (43i, 44i), lesdits rails étant disposés l'un au-dessus de l'autre,
* au moins deux chambres de mélange (48a, 48b) pourvues d'ouvertures (45ai, 45bi), lesdites chambres étant disposées de part et d'autre d'au moins un desdits rails (43, 44), et par rapport aux ouvertures (43i, 44i) afin d'obtenir une distribution ou une collecte du fluide homogène,
* des moyens de distribution (41, 49) du fluide issu de la chambre de mélange,
* des moyens de séparation desdits moyens de collecte et de distribution (42a, 42b).

8. Dispositif selon l'une des revendications 6 à 7 **caractérisé en ce que** chaque plateau (Pn) est divisé en plusieurs panneaux ou DME selon une découpe en parallèles.

9. Dispositif selon la revendication 8 **caractérisé en ce qu'**un plateau est divisé en quatre secteurs.

10. Dispositif selon l'une des revendications 5 à 9 **caractérisé en ce que** ledit rail supérieur (43) a une fonction de collecte des fluides et ledit rail (44) inférieur une fonction d'injection des fluides.

11. Dispositif selon l'une des revendications 5 à 9 **caractérisé en ce que** ledit rail supérieur (43) a une fonction d'injection des fluides et ledit rail (44) inférieur une fonction de collecte des fluides.

12. Dispositif selon l'une des revendications 5 à 9 **caractérisé en ce que** lesdits rail supérieur (43) et inférieur (44) ont une fonction d'injection-collecte des fluides.

13. Dispositif selon l'une des revendications 5 à 12 **caractérisé en ce que** les ouvertures du
ou des rails (43i, 44i) ayant une fonction d'injection sont disposées de façon telles que le jet de fluide passant à travers percute une partie d'une paroi pleine d'un des éléments mécaniques du DME (42a, 42b, 45a, 45b).

14. Dispositif selon l'une des revendications 5 à 13 **caractérisé en ce que** les ouvertures (43i, 44i) sont disposées en alternance ou en quiconque.

15. Dispositif selon l'une des revendications 5 à 14 **caractérisé en ce que** le paramètre des rails et des ouvertures (43i, 44i) est défini par :
* un diamètre compris entre 2 et 15 mm et de préférence dans la gamme 4 à 7 mm,
* un pas de perforation compris entre 25 et 400 mm et de préférence entre 50 et 200 mm,
* une vitesse de passage des fluides compris entre 3 - 20 m/s et de préférence entre 5 - 15 m/s, la valeur du pas considéré avec la valeur de la vitesse permet d'obtenir un bon mélange du fluide secondaire et du fluide principal.

16. Dispositif selon l'une des revendications 5 à 14 **caractérisé en ce que** les ouvertures (45ai, 45bi) des chambres de mélange (48a, 48b) sont choisies parmi les paramètres suivants :
* un diamètre compris entre 10 et 25 mm, et de préférence entre 5 et 50 mm,
* un pas de perforation choisi parmi l'intervalle 50 - 200 mm et de préférence dans l'intervalle 25 - 400 mm,
* une vitesse de passage du mélange compris entre 1.0 et 2.0 m/s et de préférence entre 0.5 - 3.5 m/s.

17. Procédé permettant de séparer par adsorption au moins un composé, à partir d'un mélange ou d'un corps **caractérisé en ce que** l'on met en contact un fluide principal à partir duquel on cherche à séparer certains composés avec un adsorbant choisi en fonction de son pouvoir à séparer les composés, on injecte et/ou on extrait les fluides secondaires par l'intermédiaire d'un ou plusieurs systèmes de distribution-collecte selon une des revendications 1 à 4 ou d'un dispositif selon une des revendications 5 à 15.

18. Procédé selon la revendication 17 **caractérisé en ce que** l'on regroupe les fluides par fonction (injection/ou soutirage) ou par nature ou par valeur de débit.

19. Utilisation d'un système selon l'une des revendications 1 à 4 ou d'un dispositif selon l'une des revendications 5 à 16 ou du procédé selon l'une des revendications 17 et 18 pour séparer une charge en chromatographie pour des fluides dans un état gazeux, liquide ou supercritique.

20. Utilisation d'un système selon l'une des revendications 1 à 4 ou d'un dispositif selon l'une des revendications 5 à 16 ou du procédé selon l'une des revendications 17 et 18 à la séparation de paraxylène en lit mobile simulé.

## Patentansprüche

1. System zum Sammeln und Verteilen von Fluiden für einen Fluid-Feststoff-Kontaktierungs-Apparat, wobei der Apparat eine Ummantelung (30), mindestens eine Leitung (33) zum Einleiten eines Hauptfluids und mindestens eine Evakuierungs-Leitung (31) des Hauptfluids, mehrere Verteilungsplateaus (Pn), von denen jedes besagte Plateau mehrere Misch-Paneele enthält, Verteilung und Abscheidung von Fluiden oder DME umfaßt, **DADURCH GEKENNZEICHNET, daß** es:
◆ mindestens eine Leitung (1, 2), die es zuläßt, den besagten Apparat und die Umgebung miteinander in Verbindung zu bringen,
◆ mindestens eine mit der oder den besagten Leitung(en) (1, 2) verbundene Kammer (N₁),
◆ eine oder mehre Verbindungsleitungen C(N₂₀)j, C(N₂₁)j, die die Kammer und mindestens einen der DME eines Plateaus (Pn) in Verbindung bringen, wobei die Verbindungspunkte rj der besagten Leitungen innerhalb eines Bereiches (Z₂₀, Z₂₁) gelegen sind, wobei die Plazierung des besagten Bereiches durch einen von einer der radialen Achsen des besagten Plateaus (Pn) ausgehend gemessenen Winkel α bestimmt ist, wobei jede der Verbindungsleitungen eine Länge li hat, wobei der Wert von jeder Länge li, des Winkels α und der Länge Zr des Bereiches derart gewählt ist, daß die Durchlaufzeit der Fluide zwischen einer Paneele (DME) und der oder den Leitung(en) (1, 2) im wesentlichen identisch für alle Fluide ist,
umfaßt.

2. System nach Anspruch 1, **DADURCH GEKENNZEICHNET, daß** die besagte Kammer die Aufteilung des Fluides in mindestens zwei Ströme sicherstellt.

3. System zum Sammeln und Verteilen von Fluiden nach Anspruch 1, **DADURCH GEKENNZEICHNET, daß** es
◆ mindestens eine Kammer der Ebene 1 (N₁), die ein Aufteilen oder ein Sammeln zu zweit des Fluiddurchsatzes sicherstellt, wobei die besagte Kammer (N₁) mit der oder den Leitungen (1, 2) in Verbindung steht,
◆ mindestens eine besagte Kammer der Ebene 2 (N₂₀, N₂₁), wobei die besagten Kammern ein Aufteilen oder ein Sammeln zu zweit des aus der oder den Kammer(n) stammenden oder zu der oder den Kammer(n) (N₁)geleiteten Fluiddurchsatzes sicherstellen,
◆ eine oder mehrere Verbindungsleitung(en) C(N₂₀)j, C(N₂₁)j, die sich zwischen mindestens einer Kammer der Ebene 2 (N₂₀, N₂₁) und mindestens einer der DME des Plateaus (Pn) erstrecken, wobei die Verbindungspunkte rj der besagten Leitungen in einem Bereich (Z₂₀, Z₂₁) gelegen sind, wobei die Plazierung des besagten Bereiches durch einen von einer der radialen Achsen des besagten Plateaus (Pn) ausgehend gemessenen Winkel α bestimmt ist, wobei jede der Verbindungsleitungen eine Länge li hat, wobei der Wert von jeder Länge li, des Winkels α und der Länge Zr des Bereiches derart gewählt ist, daß die Durchlaufzeit der Fluide zwischen einer Paneele (DME) und der oder den Leitung(en) (1, 2) im wesentlichen identisch für alle Fluide ist,
umfaßt.

4. System zum Sammeln und Verteilen nach einem der Ansprüche 1 bis 3,
**DADURCH GEKENNZEICHNET, daß** der Winkel α zwischen 30 und 90 Grad, vorzugsweise zwischen 50 und 60 Grad, liegt, und die Länge Zr für einen dem Winkelabschnitt α +/- ε entsprechenden Bereich zwischen 3 und 30 Grad, und vorzugsweise zwischen 7 und 15 Grad, liegt.

5. Vorrichtung zur Kontaktierung von Fluid-Feststoff nach einem der Ansprüche 1 bis 3, welche eine Ummantelung (30) mit einer Außenwand, mindestens eine Einleitungs-Leitung (33) und mindestens eine Abscheidungs-Leitung (31) für ein Hauptfluid, mehrere Einleitungs- oder Abscheidungs-Leitungen für Nebenfluide, mehrere in Abständen angeordnete Ebenen des Plateaus (Pn), wobei jedes Plateau (Pn) eine oder mehrere Verteil-Misch-Abscheide (DME) Paneele der Nebenfluide und des Hauptfluides beinhaltet, mindestens ein Verteil-Sammel-System der besagten Nebenfluide umfaßt, **DADURCH GEKENNZEICHNET, daß**:
◆ das besagte Verteil-Sammel-System am Umfang der besagten Ummantelung angebracht ist,
◆ das besagte Verteil-Sammel-System in Verbindung mit mindestens einem Verteil-Plateau (Pn) steht,
das besagte System umfaßt:
◆ mindestens eine Leitung (1, 2), die es zuläßt, die Vorrichtung und die Umgebung miteinander in Verbindung zu bringen,
◆ eine oder mehrere Kammern der Ebene 1 (N₁), die ein Aufteilen oder ein Sammeln in zwei des Fluiddurchsatzes sicherstellt(en),
◆ eine oder mehrere Kammern (N₂₀, N₂₁) der Ebene 2, wobei die besagten Kammern der Ebene 2 ein Aufteilen oder ein Sammeln in zwei des aus der Kammer (N₁) der Ebene 1 stammenden oder zu der Kammer (N₁) geleiteten Fluiddurchsatzes sicherstellen,
◆ eine oder mehrere Verbindungsleitung(en) C(N₂₀)j, C(N₂₁)j, die sich zwischen mindestens einer Kammer der Ebene 2 (N₂₀, N₂₁) und mindestens einer der DME des Plateaus (Pn) erstrecken, wobei die Verbindungspunkte der besagten Leitungen in einem Bereich (Z₂₀, Z₂₁) gelegen sind, wobei die Plazierung des besagten Bereiches durch einen von einer der radialen Achsen des besagten Plateaus (Pn) ausgehend gemessenen Winkel α bestimmt ist, wobei jede der Verbindungsleitungen eine Länge li hat, wobei der Wert von jeder Länge li, des Winkels α und der Länge Zr des Bereiches derart gewählt ist, daß die Durchlaufzeit der Fluide zwischen einer Paneele (DME) und der oder den Leitung(en) (1, 2) im wesentlichen identisch für alle Fluide ist.

6. Vorrichtung nach Anspruch 5, **DADURCH GEKENNZEICHNET, daß** der Winkel α zwischen 30 und 90 Grad, vorzugsweise zwischen 50 und 60 Grad, liegt, und daß die Länge Zr für einen dem Winkelabschnitt entsprechenden Bereich zwischen 3 und 30 Grad, und vorzugsweise zwischen 7 und 15 Grad, liegt.

7. Vorrichtung zur Kontaktierung nach einem der Ansprüche 5 oder 6, **DADURCH GEKENNZEICHNET, daß** sie mindestens ein Plateau umfaßt mit mindestens einem DME, welches die vorliegenden Merkmale aufweist:
◆ mindestens ein Sammel-Mittel für ein Hauptfluid (40),
◆ mindestens zwei jeweils mit Öffnungen (43i, 44i) versehene Schienen (43, 44) zum Durchlaß der Nebenfluide, wobei die besagten Schienen übereinander angeordnet sind,
◆ mindestens zwei mit Öffnungen (45ai, 45bi ) versehene Mischkammem (48a, 48b), wobei die besagten Kammern beiderseitig und hinsichtlich der Öffnungen (43i, 44i) mit mindestens einer der besagten Schienen (43, 44) versehen sind, um eine homogene Verteilung und ein homogenes Sammeln des Fluids zu erzielen,
◆ Mittel zur Verteilung (41, 49) des aus der Mischkammer abgegebenen Fluids,
◆ Mittel zum Trennen der besagten Mittel zum Sammeln und zum Verteilen (42a, 42b).

8. Vorrichtung nach einem der Ansprüche 6 bis 7, **DADURCH GEKENNZEICHNET, daß** jedes Plateau (Pn) in mehrere Paneele oder DME nach einer Parallelzerlegung aufgeteilt ist.

9. Vorrichtung nach Anspruch 8, **DADURCH GEKENNZEICHNET, daß** ein Plateau in vier Abschnitte unterteilt ist.

10. Vorrichtung nach einem der Ansprüche 5 bis 9, **DADURCH GEKENNZEICHNET, daß** die besagte obere Schiene (43) eine Sammel-Funktion für Fluide und die besagte untere Schiene (44) eine Injektions-Funktion für Fluide hat.

11. Vorrichtung nach einem der Ansprüche 5 bis 9, **DADURCH GEKENNZEICHNET, daß** die besagte obere Schien (43) eine Injektions-Funktion für Fluide und die besagte untere Schiene (44) eine Sammel-Funktion für Fluide hat.

12. Vorrichtung nach einem der Ansprüche 5 bis 9, **DADURCH GEKENNZEICHNET, daß** die besagten oberen (43) und unteren (44) Schienen eine Injektions-Sammel-Funktion für Fluide haben.

13. Vorrichtung nach einem der Ansprüche 5 bis 12, **DADURCH GEKENNZEICHNET, daß** die Öffnungen der Schiene(n) (43i, 44i) mit einer Injektions-Funktion derart angeordnet sind, daß der durchlaufene Fluidstrom einen Teil einer von einem der mechanischen Elemente (42a, 42b, 45a, 45b) des DME durchdrungenen Wand durchschlägt.

14. Vorrichtung nach einem der Ansprüche 5 bis 13, **DADURCH GEKENNZEICHNET, daß** die Öffnungen (43i, 44i) abwechselnd oder wechselseitig angeordnet sind.

15. Vorrichtung nach einem der Ansprüche 5 bis 14, **DADURCH GEKENNZEICHNET, daß** der Parameter der Schienen und der Öffnungen (43i, 44i) bestimmt ist durch:
◆ einen Durchmesser der Öffnungen zwischen 2 und 15mm und vorzugsweise zwischen 4 und 7mm liegend,
◆ einen Perforationsschritt zwischen 25 und 400mm und vorzugsweise zwischen 50 und 200mm liegend,
◆ eine Fluiddurchgangsgeschwindigkeit zwischen 3 - 20 m/s und vorzugsweise zwischen 5 - 15 m/s liegend, wobei der Wert des gewählten Schrittes mit dem Wert der Geschwindigkeit es zuläßt, eine gute Durchmischung des Nebenfluids und des Hauptfluids zu erhalten.

16. Vorrichtung nach einem der Ansprüche 5 bis 14, **DADURCH GEKENNZEICHNET, daß** die Öffnungen (45ai, 45bi) der Mischkammem (48a, 48b) aus den folgenden Werten ausgewählt sind:
◆ ein Durchmesser zwischen 10 und 25mm, und vorzugsweise zwischen 5 und 50 mm liegend,
◆ ein Perforationsschritt aus dem Intervall 50 - 200mm und vorzugsweise aus dem Intervall 25 - 400mm ausgewählt,
◆ eine Durchgangsgeschwindigkeit des Gemisches zwischen 1.0 - 2.0 m/s und vorzugsweise zwischen 0.5 und 3.5 m/s liegend.

17. Verfahren zur Trennung mittels Adsorption mindestens eines Bestandteils aus einem Gemisch oder aus einem Körper, **DADURCH GEKENNZEICHNET, daß** man ein Hauptfluid, aus welcher man bestimmte Bestandteile heraustrennen möchte, mit einem in Abhängigkeit von seiner Trennstärke für Bestandteile ausgewählten Adsorber zusammenbringt, daß man die Nebenfluide unter Zuhilfenahme eines oder mehrerer Verteil-Sammel-Systeme nach einem der Ansprüche 1 bis 4 oder einer Vorrichtung nach einem der Ansprüche 5 bis 15 injiziert und/oder abscheidet.

18. Verfahren nach Anspruch 17, **DADURCH GEKENNZEICHNET, daß** man die Fluide in Abhängigkeit von der Funktion (Injektion/oder Umfüllung) oder nach Eigenschaft oder nach Durchsatzwert umgruppiert.

19. Verwendung eines Systems nach einem der Ansprüche 1 bis 4 oder einer Vorrichtung nach einem der Ansprüche 5 bis 16 oder des Verfahrens nach einem der Ansprüche 17 oder 18, um eine Bestückung in Chromatographie zu trennen für Fluide in gasförmigem, flüssigem oder überkritischem Zustand.

20. Verwendung eines Systems nach einem der Ansprüche 1 bis 4 oder einer Vorrichtung nach einem der Ansprüche 5 bis 16 oder des Verfahrens nach einem der Ansprüche 17 und 18 zur Trennung von Paraxylen in simulierter mobiler Schicht.

## Claims

1. Fluid distributing-collecting system for a device for bringing fluids and solids into contact, whereby said device comprises a chamber (30), at least one hose (33) for introducing a main fluid and at least one hose (31) for evacuating the main fluid, several distributor plates (Pn), whereby each of said plates comprises several panels for mixing, distributing or extracting fluids or DME, **characterized in that** it comprises:
• at least one hose (1, 2) that makes it possible to link said device and the outside,
• at least one chamber (N₁) that is connected with said hose or hoses (1, 2),
• one or more connecting hoses C(N₂₀)j, C(N₂₁)j, that link the chamber and at least one of the DME of a plate (Pn), whereby connecting points rj of said hoses are located in a zone (Z₂₀, Z₂₁), whereby the positioning of said zone is determined by an angle á counting from one of the radial axes of said plate (Pn), whereby each of the connecting hoses has a length li, whereby the value of each of lengths li, of angle á and of length Zr of the zone is selected so that the passage time of the fluids between a panel (DME) and hose or hoses (1, 2) is essentially identical for all of the fluids.

2. System according to claim 1, wherein said chamber ensures the division of the fluid into at least two flows.

3. Fluid distributing-collecting system according to claim 1, wherein it comprises:
• at least one level 1 chamber (N₁) that ensures a two-way division or collection of the fluid flow, whereby said chamber (N₁) is connected with hose or hoses (1, 2),
• at least one so-called level 2 chamber (N₂₀, N₂₁), whereby said chambers ensure a two-way division or collection of the fluid flow that comes from or is sent to chamber or chambers (N₁),
• one or more connecting hoses (C(N₂₀)j, C(N₂₁)j that extend between at least one level 2 chamber (N₂₀, N₂₁) and at least one of the DME of a plate (Pn), whereby connecting points rj of said hoses are located in a zone (Z₂₀, Z₂₁), whereby the positioning of said zone is determined by an angle á counting from one of the radial axes of said plate (Pn), whereby each of the connecting hoses has a length li, and whereby the value of each of lengths li, angle á and length Zr of the zone are selected so that the passage time of the fluids between a panel (DME) and hose or hoses (1, 2) is essentially identical for all of the fluids.

4. Distributing-collecting system according to one of claims 1 to 3, wherein angle á is between 30 and 90 degrees, preferably between 50 and 60 degrees, and length Zr for a zone that corresponds to angle sector á +/- á is between 3 and 30 degrees and preferably between 7 and 15 degrees.

5. Device for bringing fluids and solids into contact that comprises a chamber (30) that comprises an outside wall, at least one hose (33) for introducing a main fluid and at least one hose (31) for extracting a main fluid, several hoses for introducing or extracting secondary fluids, several spaced levels of plates (Pn), whereby each plate (Pn) comprises one or more distributor-mixer-extractor (DME) panels of secondary fluids and the main fluid, at least one distributing-collecting system of said fluids, wherein:
• said distributing-collecting system is arranged on the periphery of said chamber,
• said distributing-collecting system is connected with at least one distribution plate (Pn),
said system comprises:
• at least one hose (1, 2) that makes it possible to link the device and the outside,
• one or more level 1 chambers (N₁) that ensure a two-way division or collection of the fluid flow,
• one or more level 2 chambers (N₂₀, N₂₁), whereby said level 2 chambers ensure a two-way division or collection of the fluid flow that comes from or is sent to level 1 chamber (N₁),
• one or more connecting hoses (C(N₂₀)j, C(N₂₁)j) that extend between a level 2 chamber (N₂₀, N₂₁) and at least one of the panels (DME) of a plate (Pn), whereby the connecting points of said connecting hoses are located in a zone (Z₂₀, Z₂₁), whereby the positioning of this zone is determined by an angle á counting from one of the radial axes of a plate (Pn), whereby each of the fluid connecting hoses has a length li, the value of each of lengths li, angle á and length Zr of the zone are selected so that the passage time of the fluids between a panel (DME) of a plate (Pn) and hose (1, 2) for introducing or extracting fluids is essentially identical for all of the fluids.

6. Device according to claim 5, wherein angle á is between 30 and 90 degrees, preferably between 50 and 60 degrees, and wherein length Zr that.corresponds to the angle sector is between 3 and 30 degrees and preferably between 7 and 15 degrees.

7. Device for bringing it into contact according to one of claims 5 or 6, wherein it comprises at least one plate that comprises at least one DME that has the following characteristics:
• at least one means for collecting a main fluid (40),
• at least two rails (43, 44) that allow the passage of secondary fluids that are each provided with openings (43i, 44i), whereby said rails are arranged one on top of the other,
• at least two mixing chambers (48a, 48b) that are provided with openings (45ai, 45bi), whereby said chambers are arranged on both sides of at least one of said rails (43, 44) and relative to openings (43i, 44i) to obtain a homogeneous distribution or collection of the fluid,
• means for distributing (41, 49) the fluid that is obtained from the mixing chamber,
• means for separating said collecting and distributing means (42a, 42b).

8. Device according to one of claims 6 to 7, wherein each plate (Pn) is divided into several panels or DME according to a cutaway in parallels.

9. Device according to claim 8, wherein a plate is divided into four sectors.

10. Device according to one of claims 5 to 9, wherein said upper rail (43) has a fluid collecting function, and said lower rail (44) has a fluid injecting function.

11. Device according to one of claims 5 to 9, wherein said upper rail (43) has a fluid injecting function, and said lower rail (44) has a fluid collecting function.

12. Device according to one of claims 5 to 9, wherein said upper rail (43) and lower rail (44) have a fluid injecting-collecting function.

13. Device according to one of claims 5 to 12, wherein the openings of rail or rails (43i, 44i) that have an injecting function are arranged such that the fluid jet that passes through strikes a portion of a solid wall of one of the mechanical elements of the DME (42a, 42b, 45a, 45b).

14. Device according to one of claims 5 to 13, wherein openings (43i, 44i) are arranged alternately or at random.

15. Device according to one of claims 5 to 14, wherein the parameter of the rails and openings (43i, 44i) is defined by:
• a diameter of between 2 and 15 mm and preferably in the range of 4 to 7 mm,
• a perforation span of between 25 and 400 mm and preferably between 50 and 200 mm,
• a rate of flow of the fluids of between 3-20 m/s and preferably between 5-15 m/s, whereby the value of the span that is being considered with the value of the rate makes it possible to obtain a good mixing of the secondary fluid and the main fluid.

16. Device according to one of claims 5 to 14, wherein openings (45ai, 45bi) of mixing chambers (48a, 48b) are selected from among the following parameters:
• a diameter of between 10 and 25 mm, and preferably between 5 and 50 mm,
• a perforation span that is selected from the interval 50-200 mm and preferably in the interval of 25-400 mm,
• a rate of flow of the mixture of between 1.0 and 2.0 m/s and preferably between 0.5-3.5 m/s.

17. Process that makes it possible to separate at least one compound from a mixture or an element by adsorption, wherein a main fluid, from which it is sought to separate some compounds, is brought into contact with an adsorbent that is selected as a function of its ability to separate the compounds, and the secondary fluids are injected and/or extracted via one or more distributing-collecting systems according to one of claims 1 to 4 or a device according to one of claims 5 to 15.

18. Process according to claim 17, wherein the fluids are grouped by function (injection/or draw-off) or by nature or by flow rate value.

19. Use of a system according to one of claims 1 to 4 or of a device according to one of claims 5 to 16 or of the process according to one of claims 17 and 18 for separating a feedstock by chromatography for fluids in a gaseous state, a liquid state or a supercritical state.

20. Use of a system according to one of claims 1 to 4 or of a device according to one of claims 5 to 16 or of the process according to one of claims 17 and 18 in the separation of paraxylene in a simulated moving bed.
